(19) **Europäisches Patentamt**

**European Patent Office**

**Office européen des brevets**

(11) **EP 0 537 704 B1**

(12) **EUROPEAN PATENT SPECIFICATION**

(45) Date of publication and mention
of the grant of the patent:
**26.07.2000 Bulletin 2000/30**

(51) Int. Cl.⁷: **H04L 12/40**

(21) Application number: **92117536.0**

(22) Date of filing: **14.10.1992**

(54) **Multiplex transmission system**

Multiplexübertragungssystem

Système de transmission multiplexé

(84) Designated Contracting States:
**DE FR GB IT**

(30) Priority: **16.10.1991 JP 26761991**
**19.02.1992 JP 3195392**
**14.08.1992 JP 21674092**

(43) Date of publication of application:
**21.04.1993 Bulletin 1993/16**

(73) Proprietor:
**THE FURUKAWA ELECTRIC CO., LTD.**
**Tokyo (JP)**

(72) Inventors:
• **Tanaka, Motoharu**
**Yokohama-shi, Kanagawa (JP)**
• **Hashimoto, Kyosuke**
**Hiratsuka-shi, Kanagawa (JP)**
• **Himono, Yusaku**
**Tokyo (JP)**

(74) Representative:
**Modiano, Guido, Dr.-Ing. et al**
**Modiano, Josif, Pisanty & Staub,**
**Baaderstrasse 3**
**80469 München (DE)**

(56) References cited:
**EP-A- 0 295 897      WO-A-84/00862**
**FR-A- 2 627 036      US-A- 4 994 690**

## Description

## BACKGROUND OF THE INVENTION

Field of the Invention

The present invention relates to a multiplex transmission system for data transmission between multiplex nodes which are connected to common signal transmission lines.

Description of the Related Art

Multiplex transmission systems of this type include LAN (local area network) transmission systems which combine CSMA/CD (carrier sense multiple access/collision detection) and NDA (non-destructive arbitration) or use tokens. As a typical LAN, a CAN (controller area network) or the like is used for data transmission in an automobile, for example.

One such multiplex transmission system is described in, e.g., Japanese Patent Application No. H2-113751 (Laid-open Publication No. H4-10828). This system is provided with terminal circuits which include terminal resistors. These resistors are connected to the respective both ends of multiplex transmission lines which constitute this system.

Due to the use of the terminal resistors, in a conventional multiplex transmission system, failure of one multiplex transmission line influences the other normal transmission lines, and the damaged transmission line cannot be separated. According to the system described above, therefore, a plurality of multiplex nodes, each including a transmission control circuit and a reception control circuit, are connected to one another by means of three common multiplex transmission lines. One of the multiplex nodes detects failure when the node can not communicate with other multiplex nodes, and a voltage generator circuit of this multiplex node changes the voltage of any one of the multiplex transmission lines, thereby changing the state of data transmission between the individual transmission lines. Based on this change of the transmission state, the transmission control circuit and the reception control circuit of each multiplex node can achieve multiplex transmission of data.

According to this multiplex transmission system, the reception control circuit must switch the multiplex transmission line for data reception in changing the transmission state, so that the configuration of the circuit is complicated, and there is such a risk that it takes much time to manufacture it. If the circuit configuration of this system is complicated, moreover, the ground potential difference between the multiplex nodes may be too small for accurate data transmission, in some cases.

According to this multiplex transmission system, furthermore, transmission waveforms collapse in the transmission control circuit, due to the difference in switching speed between drivers on the source current and sink current sides, so that the reception control circuit sometimes cannot normally receive the data. If one of the terminal resistors of this system is disengaged, moreover, reflected waves are produced on the multiplex transmission lines, so that the transmission waveforms collapse, possibly preventing normal data reception in the reception control circuit.

A multiplex transmission system as defined in the preamble of claim 1 is known from WO-A-84 00 862.

## SUMMARY OF THE INVENTION

The present invention has been contrived in consideration of these circumstances, and has an object to provide a multiplex transmission system in which data can be transmitted between multiplex nodes even in case of failure of signal transmission lines, and accurate data transmission can be effected even under severe conditions in an automobile.

Another object of the present invention is to provide a multiplex transmission system in which collapse of transmission waveforms, attributable to a difference in switching speed between drivers, can be corrected.

Still another object of the present invention is to provide a multiplex transmission system in which the influence of reflected waves can be restrained even if one of terminals is disengaged.

The above object is achieved by a multiplex transmission system as defined in claims 1 and 9. The system comprises terminal circuits for individually connecting the respective terminal portions of signal transmission lines; and each of the multiplex nodes includes a transmitter circuit for generating the potential difference on the signal transmission lines in accordance with a signal from a communication control circuit, and a receiver circuit including passive potential detecting means for detecting the potential when the state of each of the signal transmission lines being in a passive state and bias means for analogously changing input potentials from the individual signal transmission lines in accordance with the passive-state potential detected by means of the passive potential detecting means.

According to the multiplex transmission system described above, a receiver circuit of each multiplex node is provided with a passive potential detector section, for use as the passive potential detecting means, and a bias section as the bias means, for example. The bias section applies an analog bias to input lines (buses), which are connected individually to the signal transmission lines, on the basis of the potential in a passive state (state without data) detected by the passive potential detector section, thereby setting the respective input potentials of the input lines within a predetermined potential range without regard to potential variations of the transmission lines. Thus, if the potential of any signal transmission line varies due to failure of the transmission line, a potential difference is produced between the input lines when the signal transmission line is brought to a dominant state (state in which a potential difference is produced between the signal transmission lines), so that the data can be received.

Further, the terminal circuits may be provided with bias resistors, and bias voltage is applied across the bias resistors in a manner such that one signal transmission line is connected to the ground and the other to the power supply. If one terminal is disengaged, in this case, the influence of reflected waves can be restrained, so that the data can be normally received.

Furthermore, the transmitter circuit and the terminal circuits may be provided with restraining means, e.g., capacitors, so that a switching delay between drivers can be absorbed to shape up transmission waveforms.

## BRIEF DESCRIPTION OF THE DRAWINGS

Fig. 1 is a block diagram illustrating an arrangement of a multiplex transmission system according to the present invention;
Fig. 2 is a circuit diagram illustrating an arrangement of a second embodiment of a receiver circuit according to the present invention;
Fig. 3 is a circuit diagram illustrating an arrangement of a third embodiment of the receiver circuit;
Fig. 4 is a circuit diagram illustrating an arrangement of a fourth embodiment of the receiver circuit;
Fig. 5 is a circuit diagram illustrating an arrangement of a fifth embodiment of the receiver circuit;
Fig. 6 is a circuit diagram illustrating an arrangement of a sixth embodiment of the receiver circuit;
Fig. 7 is a circuit diagram illustrating an arrangement of a first embodiment of a passive potential detector section shown in Fig. 1;
Fig. 8 is a circuit diagram illustrating an arrangement of a second embodiment of the passive potential detector section;
Fig. 9 is a circuit diagram illustrating an arrangement of a first embodiment of bias sections shown in Fig. 1;
Fig. 10 is a circuit diagram illustrating an arrangement of a second embodiment of the bias section;
Fig. 11 shows diagrams illustrating data signal waveforms and receiver signal waveforms on the buses shown in Fig. 1;
Fig. 12 shows diagrams illustrating data signal waveforms on the buses shown in Fig. 2;
Fig. 13 is a circuit diagram illustrating an arrangement of a seventh embodiment of the receiver circuit;
Fig. 14 is a circuit diagram illustrating an arrangement of an eighth embodiment of the receiver circuit;
Fig. 15 is a circuit diagram illustrating an arrangement of a ninth embodiment of the receiver circuit;
Fig. 16 is a circuit diagram illustrating an arrangement of an embodiment of a transmitter circuit shown in Fig. 1;
Fig. 17 shows diagrams illustrating data signal waveforms on the buses obtained with of the transmitter circuit shown in Fig. 16;
Fig. 18 shows circuit diagrams illustrating the respective arrangements of various embodiments of a terminal circuit shown in Fig. 1;
Fig. 19 shows circuit diagrams illustrating the respective arrangements of alternative embodiments of the transmitter circuit;
Fig. 20 shows circuit diagrams illustrating the respective arrangements of further embodiments of the transmitter circuit;
Fig. 21 shows circuit diagrams illustrating the respective arrangements of further embodiments of the transmitter circuit;
Fig. 22 shows circuit diagrams illustrating the respective arrangements of further embodiments of the transmitter circuit;
Fig. 23 shows circuit diagrams illustrating the respective arrangements of alternative embodiments of the terminal circuit; and
Fig. 24 shows diagrams illustrating data signal waveforms on the buses obtained with of the transmitter circuits and terminal circuits shown in Fig. 22 and 23.

## DETAILED DESCRIPTION

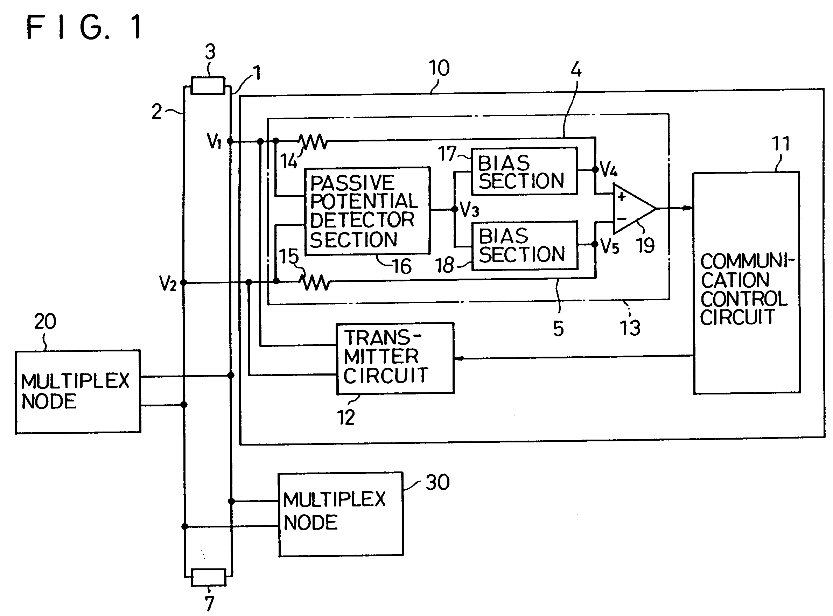

Referring to Fig. 1, a multiplex transmission system according to the present invention comprises a plurality of multiplex nodes 10, 20 and 30 and multiplex transmission lines (buses) 1 and 2. The multiplex nodes 10, 20 and 30 are connected individually in parallel with two common buses 1 and 2, and data signals are transmitted through the buses 1 and 2. Terminal circuits 3 and 7 are connected individually to the opposite ends of the buses 1 and 2. These multiplex nodes 10, 20 and 30 are constructed in the same manner, so that only the arrangement of the node 10 will be described below for simplicity.

The multiplex node 10 is composed of a communication control circuit 11 for communication processing control, a transmitter circuit 12 for receiving transmitter signals from the control circuit 11 and sending them to the buses 1 and 2, a receiver circuit 13 for delivering receiver signals, fetched from the buses 1 and 2, to the circuit 11, and the like.

The communication control circuit 11 performs communication processing control such that it fetches output signals from various apparatuses (not shown) connected thereto, frames these output signals in predetermined data units, and delivers the framed signals as the transmitter signals to the transmitter circuit 12. Like these transmitter signals, framed receiver signals are fetched from the receiver circuit 13 by the control circuit 11. Also, the communication control circuit 11 fetches only necessary signals for local use, among other receiver signals, and delivers them to the individual apparatuses connected thereto. If signals transmitted from the other multiplex nodes are normally received by the receiver circuit 13, furthermore, the control circuit 11 performs communication processing control such that it delivers a reception acknowledgment signal (hereinafter referred to as ACK signal) to the transmitter circuit 12.

The transmitter circuit 12, which is connected to the buses 1 and 2, transmits the transmitter signals (including the ACK signal) from the communication control circuit 11 to the buses 1 and 2 in a transmission mode for multiplex transmission. The circuit 12 is provided with a noise killer circuit (mentioned later) which prevents noises from being generated from the buses during the transmission.

The receiver circuit 13 is composed of resistors 14 and 15, a passive potential detector section 16, bias sections 17 and 18, and a reception comparator 19.

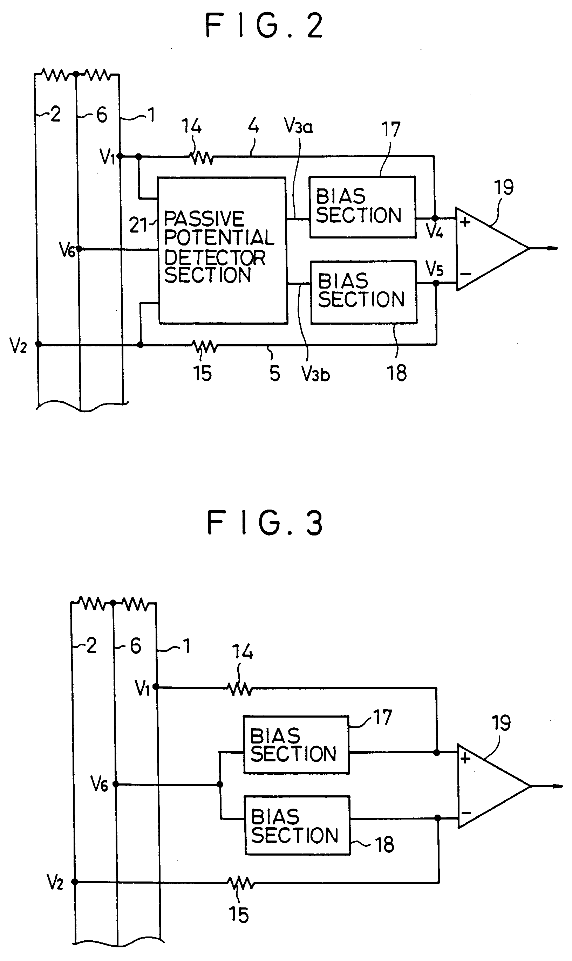

Figs. 2 and 3 are circuit diagrams illustrating second and third embodiments, respectively, of the receiver circuit, in which three signal transmission lines are used. In these cases, the receiver circuit basically operates in the same manner as in the arrangement of Fig. 1 in which the signal transmission lines are two in number, and therefore, the particulars thereof are omitted. One of multiplex nodes controls a voltage setting circuit (not shown), and the potential of a bus 6 is fixed without regard to its mode, dominant or passive. If the potential of the bus 6 is a passive one, no passive potentials have to be detected. As in the case of the third embodiment shown in Fig. 3, therefore, a passive potential detector section 21 may be omitted. In Figs. 1, 2 and 3 and the subsequent drawings, like reference numerals are used to designate like components throughout the several views for simplicity of illustration.

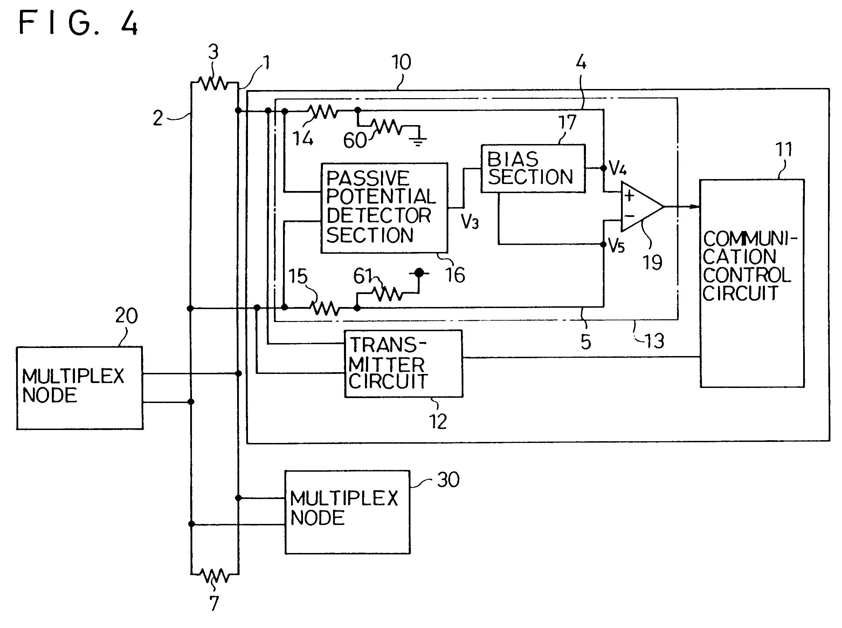

In the present invention, moreover, only one bias section may be used in place of the two. Referring to Figs. 4 to 6, resistors 60 and 61 for differentiating the respective potentials of input lines (buses) 4 and 5 are connected to the buses 4 and 5, respectively, in these embodiments.

The resistors 14 and 15 are connected to the reception comparator 19 by means of the buses 4 and 5, respectively, and serve as attenuators for lowering the respective potentials V1 and V2 of the buses 1 and 2 to levels such that the comparator 19 can receive signals.

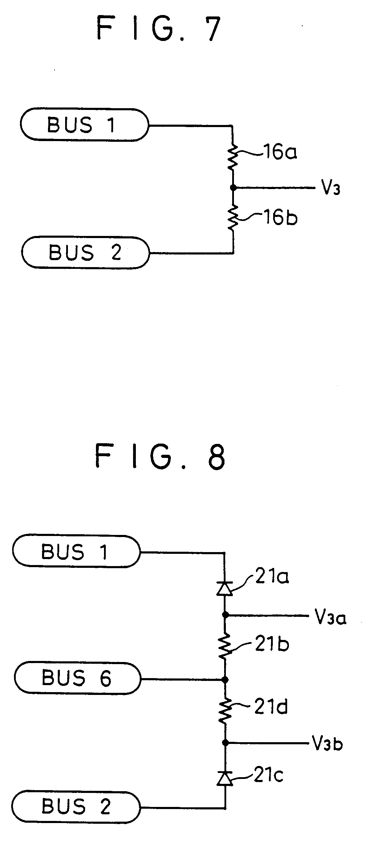

In the passive potential detector section 16, as shown in Fig. 7, resistors 16a and 16b are connected between the buses 1 and 2, and an intermediate potential is detected as a passive-mode potential V3 of the buses 1 and 2. The potential V3 is delivered to the bias sections 17 and 18 in the arrangement of Fig. 1. In the arrangement of Fig. 4, on the other hand, the potential V3 is delivered to the bias section 17.

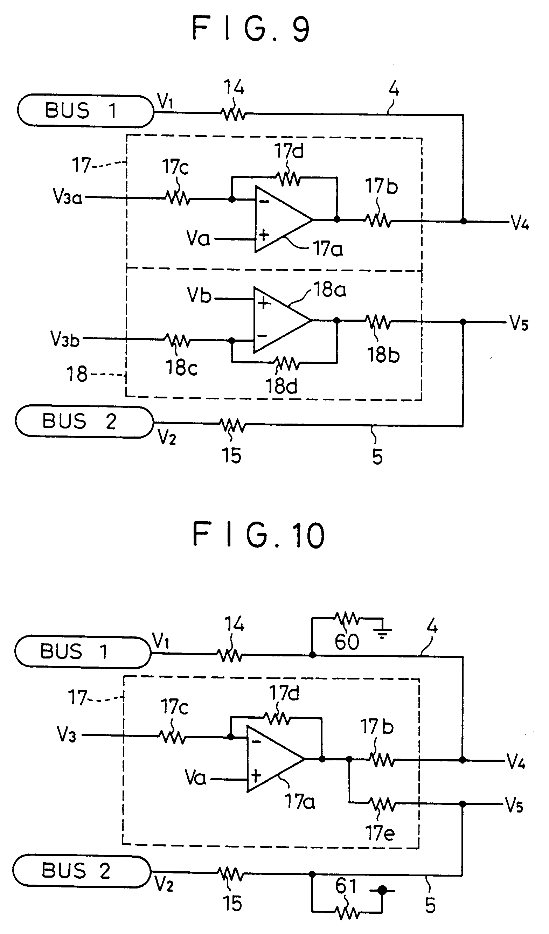

Fig. 8 illustrates a detailed circuit arrangement of the potential detector section 21 shown in Fig. 2. As shown in Fig. 8, the detector section 21 is composed of a diode 21a and a resistor 21b connected to the buses 1 and 6, respectively, and a diode 21c and a resistor 21d connected to the buses 2 and 6, respectively. Potentials V3a and V3b delivered from between these diodes and resistors are used as passive potentials. The passive potentials V3a and V3b are set so that they output the potential V6 of the bus 6 when $V1 \geqq V6 \geqq V2$ is given, that the potential V3a outputs the potential V1 of the bus 1 when $V1 < V6$ is given, and that the potential V3b outputs the potential V2 of the bus 2 when $V6 < V2$ is given. When passive and dominant modes are established on the bus, therefore, the input waveforms of the comparator 19 correspond to potentials within a predetermined range. At the point of change of the modes, the input waveforms of the comparator 19 cross. This situation will be described in detail later.

Referring to Fig. 9, the bias section 17 is composed of an operational amplifier 17a and resistors 17b to 17d, and the bias section 18 is composed of an operational amplifier 18a and resistors 18b to 18d. The bias sections 17 and 18 applies an analog bias to the buses 4 and 5, corresponding to the passive potentials V3a and V3b (potential V3 for the case of two signal transmission lines shown in Fig. 1) inputted from the passive potential detector section 21, so that potentials V4 and V5 of the buses 4 and 5 are set within a predetermined range without regard to variations of the potentials of the buses 1 and 2. These bias sections may reduced to one in number. Fig. 10 shows an embodiment for this case, in which resistors 17e, 60 and 61 are additionally used.

When an input reference potential Va is applied to a positive input terminal of an operational amplifier 17a, in the bias section 17 shown in Fig. 9, the output potential of the amplifier 17a acts so that the potential of a negative input terminal of the amplifier 17a is equal to the reference potential Va. Thus, the potential V4 can be set within the predetermined range.

Let us examine the values of the potential V4 obtained when the buses are in the passive mode (potential of bus 1 $\leqq$ potential of bus 2 for two signal transmission lines; potential of bus 1 $\leqq$ potential of bus 6 $\leqq$ potential of bus 2 for three signal transmission lines, according to the embodiment) and when the buses are in the dominant mode (potential of bus 1 > potential of bus 2 for two signal transmission lines; potential of bus 1 > potential of bus 6 or potential of bus 6 > potential of bus 2 for three signal transmission lines, according to the embodiment), where the ratios between the respective resistance values R1, R2, R3 and R4 of the resistors 14, 17b, 17c and 17d are adjusted to the relation R1 : R2 = R3 : R4.

When the buses are in the passive mode, that is, when the input potential V1 of the bus 1 is equal to the passive potential V3a, voltage drops between the resistors 14 and 17c and between the resistors 17b and 17d are equal, so that the potential Va is equal to the potential V4. This holds even though the passive potential V3a varies.

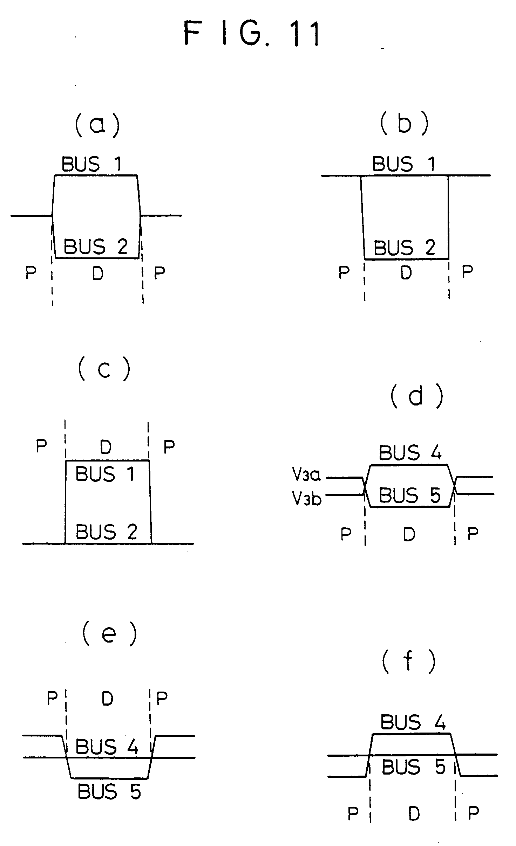

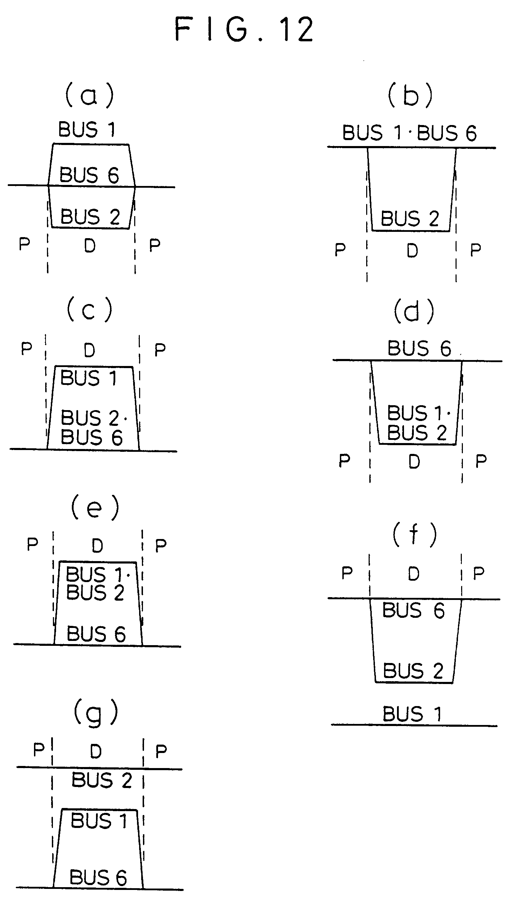

When the buses 1 and 2 in the dominant mode are normal, or when the bus 2 is out of order, that is, when the bus 2 is shorted to the power supply or ground, as shown in Fig. 11(a) or 11(c) (when the buses 1, 2 and 6 are normal, when the bus 2 is snapped or shorted to the ground, when the buses 1 and 2 are shorted to each other, or when the bus 2 is shorted to the power supply, as shown in Fig. 12(a), 12(c), 12(e) or 12(g), in the case of three signal transmission lines), the input potential V1 is higher than the passive potential V3a, so that the potential V4 of the bus 4 is higher than the reference potential Va (see Figs. 11(d) and 11(f)). When the bus 1 is shorted to the power supply or ground, as shown in Fig. 11(b) (when the bus 1 is snapped or shorted to the power supply, or when the bus 1 is shorted to the ground, as shown in Fig. 12(b), or 12(f), in the case of three signal transmission lines), however, the potential of the bus 1 does not vary and the potential V3a is equal to the potential V1, so that the potentials V4 and Va are equal without regard to the state, passive or dominant (Fig. 11(e)).

Moreover, as shown in Fig. 12 (d), when the buses 1 and 2 are shorted to each other, the potential of the bus 1 varies to a reverse direction to the direction which should substantially varies, however, V3a at the dominant mode is equal to V1, so that the potential V4 is fixed without regard to the mode, passive or dominant, as shown Fig. 11 (e).

When an input reference potential Vb is applied to a positive input terminal of an operational amplifier 18a, also in the bias section 18, the output potential of the amplifier 18a acts so that the potential of a negative input terminal of the amplifier 18a is equal to the reference potential Vb. Thus, the potential V5 can be set within the predetermined range.

Let us examine the values of the potential V5 obtained when the buses are in the passive mode and in the dominant mode, where the ratios between the respective resistance values R5, R6, R7 and R8 of the resistors 15, 18b, 18c and 18d are adjusted to the relation R5 : R6 = R7 : R8 .

When the buses are in the passive mode, that is, when the input potential V2 of the bus 2 is equal to the passive potential V3b, voltage drops between the resistors 15 and 18c and between the resistors 18b and 18d are equal, so that the potential Vb is equal to the potential V5. This holds even though the passive potential V3b varies.

When the buses 1 and 2 in the dominant mode are normal, or when the bus 1 is out of order, that is, when the bus 1 is shorted to the power supply or ground, as shown in Fig. 11(a) or 11(b) (when the buses 1, 2 and 6 are normal, when the bus 1 is snapped or shorted to the power supply, when the buses 1 and 2 are shorted to each other, or when the bus 1 is shorted to the ground, as shown in Fig. 12(a), 12(b), 12(d) or 12(f), in the case of three signal transmission lines), the input potential V2 is lower than the passive potential V3b, so that the potential V5 of the bus 5 is lower than the reference potential Vb (see Figs. 11(d) and 11(e)). When the bus 2 is shorted to the power supply or ground, as shown in Fig. 11(c) (when the bus 2 is shorted to the ground, or when the bus 2 is shorted to the power supply, as shown in Fig. 12(c), or 12(g), in the case of three signal transmission lines), however, the potential of the bus 2 does not vary and the potential V3b is equal to the potential V2, so that the potentials V5 and Vb are equal without regard to the mode, passive or dominant (Fig. 11(f)).

Moreover, as shown in Fig. 12 (e), when the buses 1 and 2 are shorted to each other, the potential of the bus 2 varies to a reverse direction to the direction which should substantially varies, however, V4a at the dominant mode is equal to V2, so that the potential V5 is fixed without regard to the mode, passive or dominant, as shown Fig. 11 (f).

At this time, the input reference potential Va is lower than the potential Vb, and the resistance values R1 to R8 of the resistors 14, 17b to 17d, 15, and 18b to 18d are adjusted so that voltage variations for the dominant mode cross one another when the passive mode changes into the dominant mode.

When the reception comparator 19, comparing the potentials V4 and V5 inputted from the buses 4 and 5, recognizes received data signals (including the ACK signal), it delivers the signals to the communication control circuit 11.

In the receiver circuit 13 according to the present invention, the reception comparator 19 can exhibit data without regard to the potentials V1 and V2 of the buses 1 and 2 if the passive mode (indicated by "P") and the dominant mode (indicated by "D") are established on the buses 1 and 2, as shown in Figs. 11(a) to 11(c) and Figs. 12(a) to 12(g). In this embodiment, the respective waveforms of the received data signals get within a voltage range for reception, and are crossed at the points of change of the signals (from the passive mode to the dominant mode, and vice versa). In the passive mode, as shown in Figs. 11(d) to 11(f), the respective potentials V4 and V5 of the buses 4 and 5 are set within the fixed range so that the potential V4 is lower than the potential V5. In the dominant mode, on the other hand, the potential V4 is higher than the potential V5. Thus, the potentials V4 and V5 for the passive and dominant modes cross each other.

Thus, in this embodiment, the receiver circuit of each multiplex node applies the bias to the buses 4 and 5 for the data signals, connected to the signal transmission lines 1 and 2, respectively, on the basis of the potentials for the passive mode, thereby setting the received potentials within the predetermined range. Even if the potentials of the buses 1 and 2 vary due to failure of the buses, therefore, the communication control circuit 11 can recognize the data signals on the buses 1 and 2 when the buses 1 and 2 become dominant.

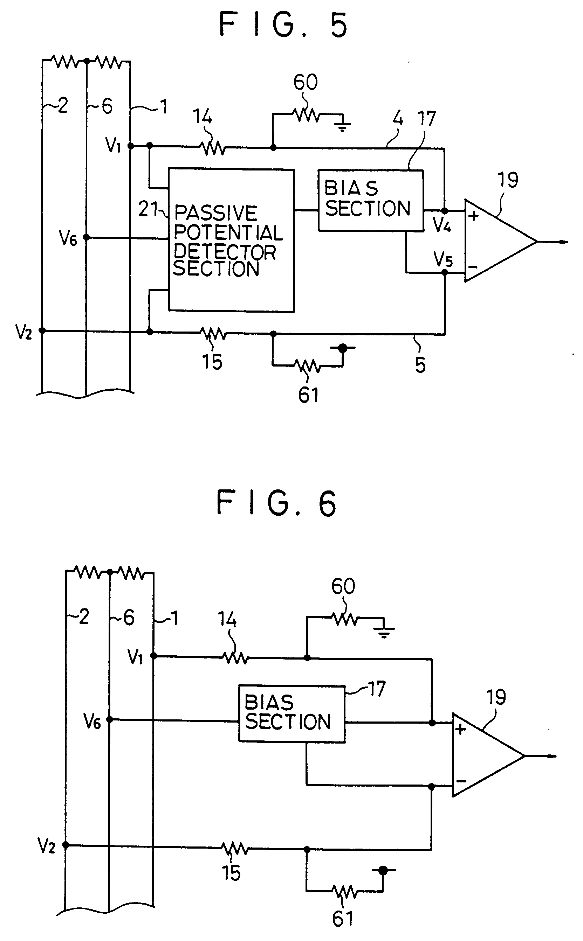

The following is a description of the principle of operation of a second embodiment of the receiver circuit 13, in which three signal transmission lines are used, as shown in Figs. 2 and 5.

The case of the bus 1 will be described first. If the signal waveforms on the bus are the ones shown in Figs. 12(a), 12(b), 12(c), 12(e) and 12(g), the potential of the bus 1 cannot change in the opposite direction (or become lower than the potential of the bus 6) in the dominant mode and in a state of which the passive-mode potentials of the buses 1 and 6 are equal. Therefore, the passive potential detector section 21 delivers the potential V6 of the bus 6 as the potential V3a (see Fig. 8) to the bias section 17. Thus, the passive-mode potential V4 of the bus 4 is set within the predetermined range. The reference potential Va and the passive-mode potential V4 are equal if the then ratios between the respective resistance values R1, R2, R3, R4 and R9 of the resistor 14, 17b, 17c, 17d and 21b are adjusted to the relation $R1 : R2 = (R9 + R3) : R4$.

If the signal waveforms on the bus are the ones shown in Figs. 12(d) and 12(f), on the other hand, the passive- or dominant-mode potential of the bus 1 changes in the opposite direction (or becomes lower than the potential of the bus 6). In order to set the passive-mode potential V4 of the bus 4 within the predetermined range, therefore, the passive potential detector section 21 must deliver the potential V1 of the bus 1 to the bias section 17. At this point of time, however, the potential V3a from the detector section 21 is higher than the potential V1 of the bus 1 by a forward potential VDa of the diode 21a. Actually, the bias section 17 applies the bias on the basis of the potential V3a (= (V1 + VDa)) from the passive potential detector section 21, so that the respective resistance values of the resistors 17c, 17d and 21b should be set in ratios such that the potential VDa is canceled.

The following is a description of the case of the bus 2, which may be regarded as similar to the case of the bus 1. If the signal waveforms on the bus are the ones shown in Figs. 12(a), 12(b), 12(c), 12(d) and 12(f), the potential of the bus 2 cannot change in the opposite direction (or become higher than the potential of the bus 6) in the dominant mode and in a state of which the passive-mode potentials of the buses 2 and 6 are equal. Therefore, the passive potential detector section 21 delivers the potential V6 of the bus 6 as the potential V3b (see Fig. 8) to the bias section 18.

If the signal waveforms on the bus are the ones shown in Figs. 12(e) and 12(g), on the other hand, the passive- or dominant-mode potential of the bus 2 changes in the opposite direction (or becomes higher than the potential of the bus 6). Thus, the passive potential detector section 21 delivers the potential V2 of the bus 2 to the bias section 18.

In this embodiment, therefore, the respective potentials V4 and V5 of the buses 4 and 5 connected to the buses 1 and 2, respectively, can be set within the predetermined range even though the respective potentials V1 and V2 change in the passive mode, and the signal waveforms on the buses 4 and 5 are crossed in the dominant mode. Thus, the reception comparator 19 can exhibit the changes of mode of the buses 1 and 2.

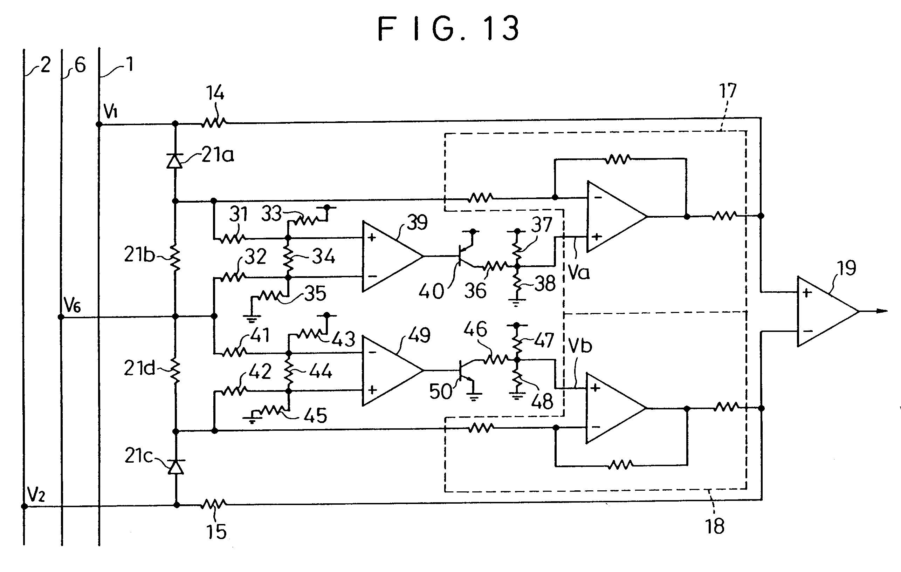

Fig. 13 is a circuit diagram illustrating an arrangement of a seventh embodiment of the receiver circuit, in which three signal transmission lines are used. This receiver circuit is based on the same principle of operation of the second embodiment. Referring to Fig. 13, the passive potential, which normally is the potential V6 of the bus 6, may be the potential of the bus 1 or 2 according to circumstances. This embodiment differs from the second embodiment in the arrangement of the section for the generation of the respective input reference potentials Va and Vb of the bias sections 17 and 18. In this embodiment, this section is composed of resistors 31 to 38 and 41 to 48, comparators 39 and 49, and transistors 40 and 50. When the potentials of the buses change in the opposite direction (see Figs. 12(d) to 12 (g)), the input reference potentials Va and Vb are changed.

If the potential of the bus 1 is passive, that is, if it is lower than the potential of the bus 6, according to this embodiment, for example, a potential obtained by adding the voltage drop VDa in the diode 21a is delivered from the transistor 40 to the bias section 17. Thus, in this embodiment, the input reference potential Va is increased so as to cancel the voltage drop VDa.

Referring to Fig. 13, if the signal waveforms on the bus, in the circuit on the side of the bus 1, are the ones shown in Figs. 12(a), 12(b), 12(c), 12(e) and 12(g), the input reference potential Va is determined depending on the resistors only, as in the case of the second embodiment. If the signal waveforms are the ones shown in Figs. 12(d) and 12(f), however, the comparator 39 in the circuit on the side of the bus 1 detects this state, and the transistor 40 is turned on to raise the input reference potential Va. Thus, in this embodiment, the influence of the voltage drop VDa can be removed, and the variation of the ground offset of the individual multiplex nodes can be canceled.

Also in the circuit on the side of the bus 2, if the signal waveforms on the bus are the ones shown in Figs. 12(a), 12(b), 12(c), 12(d) and 12(f), the input reference potential Vb is determined depending on the resistors only. If the signal waveforms are the ones shown in Figs. 12(e) and 12(g), however, the comparator 49 in the circuit on the side of the bus 2 detects this state, and the transistor 50 is turned on to lower the input reference potential Vb.

In the case where the three signal transmission lines are used, the potential of the bus 6 undergoes no variation attributable to the mode change, so that the passive potential is equal to the potential V6 of the bus 6. If the bus potential is opposite (or if the signal waveforms are the ones shown in Figs. 12(d) to 12(g)), however, the potential V6 of the bus 6 cannot be made passive. This is because if the bias is applied on the basis of the potential V6 of the bus 6 when the waveforms are the ones shown in Figs. 12(d) and 12(f), for example, the potential V4 of the bus 4 becomes lower than the input reference potential Va, so that the potential V4 of the bus 4 cannot exceeds the potential V5 of the bus 5 even in the dominant mode. In order to solve this problem, a passive potential is used as the potential of the bus 1 in the circuit of Fig. 13. The present invention is not, however, limited to this arrangement. Alternatively, it is necessary only that the bus 1 be connected with a circuit which operates only when the potential V4 is lower than the input reference potential Va, that is, voltage restricting sections which restrict the voltage lest the potential V4 be lower than the input reference potential Va.

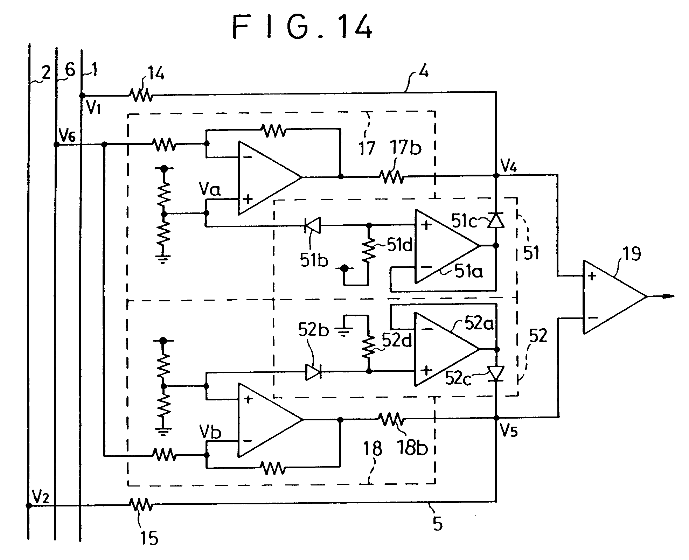

Fig. 14 shows an example of the circuit which gives practical effect to the alternative method described above. Referring to Fig. 14, this receiver circuit comprises the bias sections 17 and 18 and voltage restricting sections 51 and 52. The voltage restricting section 51, which includes an operational amplifier 51a, diodes 51b and 51c, and a resistor 51d, restricts the voltage lest the potential V4 of the bus 4 be lower than the input reference potential Va. The voltage restricting section 52, which includes an operational amplifier 52a, diodes 52b and 52c, and a resistor 52d, restricts the voltage lest the potential V5 of the bus 5 be higher than the input reference potential Vb.

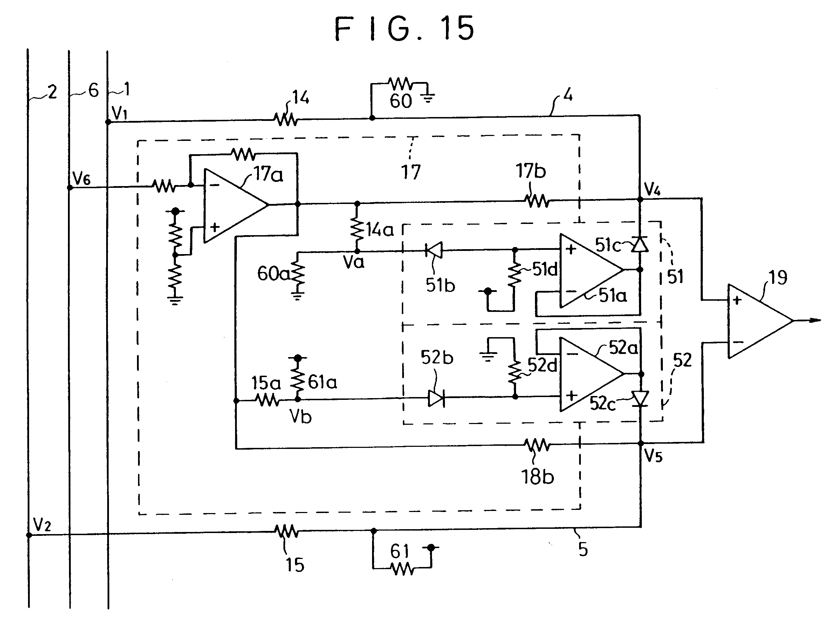

Further, the bias sections may be reduced to one in number. Fig. 15 shows an embodiment for this case. Referring to Fig. 15, according to this embodiment, resistors 14a and 15a, which connect the output of the operational amplifier 17a of the bias section 17 and the diodes 51b and 52b, respectively, and resistors 60, 60a, 61 and 61a are additionally used. In this case, if the resistors 17b, 14a, 18b and 15a have the same resistance value, and if the resistors 60, 60a, 61 and 61a have the same resistance value, the passive potentials Va and Vb are equal to those of the buses 4 and 5 as input lines.

The following is a detailed description of these circumstances.

According to this embodiment, the potential of the positive input terminal of the operational amplifier 51a, in the circuit on the side of the bus 1, is a potential obtained by adding the input reference potential Va and a forward voltage VDb of the diode 51b. Since the output potential of the amplifier 51a serves to make the respective potentials of its positive and negative input terminals, moreover, it is equal to (Va + VDb). If the diodes 51b and 51c are the same kind, the forward potential of the diode 51c is, therefore, equal to VDb. The diode allows no electric current to flow unless a potential difference not smaller than the value of the forward potential VDb is produced. If the potential V4 of the bus 4 is not lower than (Va + VDb - VDb) = Va , therefore, no current flows through the diode 51c. Thus, the voltage restricting section 51 can prevent the potential V4 from becoming lower than the input reference potential Va. Also, the section 51 can cancel variations of the forward voltages of the diodes caused by the influence of temperature.

Also in the circuit on the side of the bus 2, the voltage restricting section 52 acts lest the potential V5 of the bus 5 be higher than the input reference potential Vb. Thus, the signal waveforms shown in Figs. 12(d) and 12(e) change into the waveforms on the buses 4 and 5 shown in Figs. 11(e) and 11(f), respectively, and the reception comparator 19 can exhibit the passive or dominant mode.

Thus, in the receiver circuit according to the present embodiment, the input waveforms of the comparator can be set within a predetermined potential range without regard to the variations of the potentials of the signal transmission lines, if the passive mode (state without signals) and the dominant mode (state with signals) are established on the transmission lines. In this receiver circuit, moreover, the input waveforms are crossed at the points of change of the mode of the signal transmission lines. Accordingly, in the receiver circuit of this embodiment, the data signals can be normally received even in case of failure of the transmission lines. Since this receiver circuit, unlike the conventional one, is not designed for switching receiver signals, moreover, its configuration is simple. Furthermore, this receiver circuit can receive the data signals without regard to the state, normal or abnormal, of the signal transmission lines, even under unfavorable conditions or influences of an automobile which causes ground potential differences between the multiplex nodes, for example. According to this embodiment, therefore, the efficiency of data transmission can be improved.

The following is a description of the terminal circuits 3 and 7 and the transmitter circuit 12 of the multiplex node of the multiplex transmission system shown in Fig. 1.

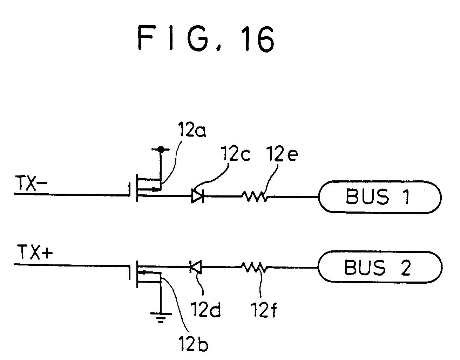

The terminal circuits 3 and 7 are generally constructed in the manner shown in Fig. 4, while the transmitter circuit 12 is arranged as shown in Fig. 16. The transmitter circuit 12 shown in Fig. 16 comprises filed-effect transistors (hereinafter referred to as FETs) 12a and 12b for use as drivers, diodes 12c and 12d for protecting the FETs 12a and 12b, and resistors 12e and 12f. The FETs 12a and 12b are suited for high-speed data transmission. The buses 1 and 2 are connected with the P- and N-channel FETs 12a and 12b, respectively, and perform balanced transmission. Symbols TX+ and TX- designate the respective inputs of FET gates. If the multiplex transmission lines are two in number, the signal waveforms on the normal bus for the balanced transmission behave in the manner shown in Fig. 11(a).

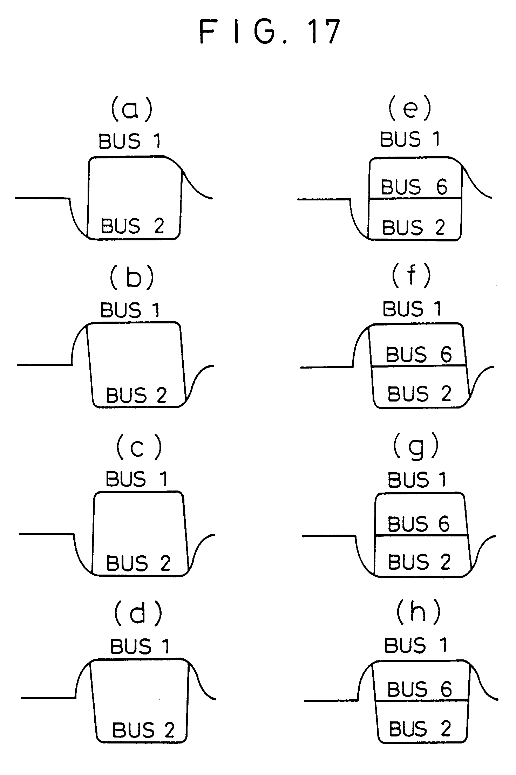

None of the P and N channels of the FETs 12a and 12b are quite equal in switching characteristic, ON resistance, etc. Moreover, actual signal waveforms are not similar to the square waveform shown in Fig. 11(a), and are distorted unstable waveforms, such as the ones shown in Figs. 17(a) to 17(d). Fig. 17(a) shows a waveform which is indicative of the case that the N-channel FET 12b is turned on and off earlier. More specifically, this waveform is pulled toward the N channel, which is switched earlier, when the FET is turned on, and toward the P channel, which is switched later, when the FET is turned off. Fig. 17(b) shows a waveform which is indicative of the case that the P-channel FET 12a is turned on and off earlier. Fig. 17(c) shows a waveform which is indicative of the case that the N-channel FET 12b is turned on earlier and the P-channel FET 12a is turned off earlier. Fig. 17(d) shows a waveform which is indicative of the case that the P-channel FET 12a is turned on earlier and the N-channel FET 12b is turned off earlier. Figs. 17(e) to 17(h) show similar signal waveforms for the case of three multiplex transmission lines.

In such an unstable state, failure of data transmission or radiation of radio noises may be caused, so that these waveforms should be shaped up.

In order to shape up the waveforms, according to the present invention, there is provided the multiplex transmission system in which a filter, formed of a capacitor or coil, is connected to the terminal circuits 3 and 7 or the transmitter circuit 12.

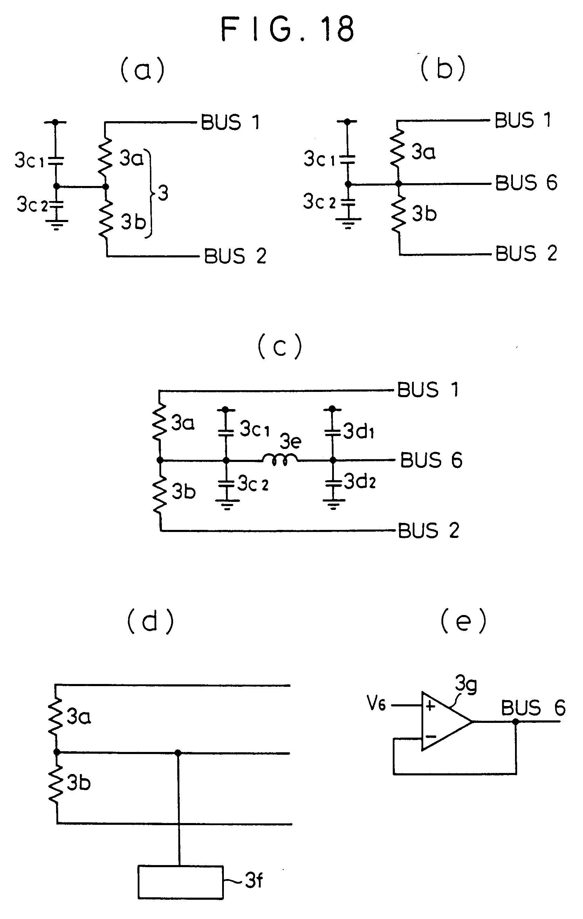

Fig. 18 shows circuit diagrams illustrating several embodiments of the terminal circuits for waveform shaping according to the present invention. Since the terminal circuits 3 and 7 are constructed in like manner, only the circuit 3 will be described below.

Fig. 18(a) is a circuit diagram illustrating an example of the terminal circuit 3 which uses two multiplex transmission lines. Referring to Fig. 18(a), the terminal circuit 3 is composed of terminal resistors 3a and 3b of the same resistance value. Capacitors 3c1 and 3c2 are connected to the middle point between the resistors 3a and 3b. Thus, in this embodiment, a switching delay can be absorbed by the capacities of the capacitors so that the signals waveforms on the buses 1 and 2 can retain their shapes even though the leading and trailing edges of the waveforms on the buses are not completely coincident.

Fig. 18(b) is a circuit diagram illustrating another example of the terminal circuit 3 which uses three multiplex transmission lines. Referring to Fig. 18(b), the capacitors 3c1 and 3c2 are connected to the middle point between the terminal resistors 3a and 3b in the terminal circuit 3, as in the arrangement shown in Fig. 18(a).

Fig. 18(c) is a circuit diagram illustrating still another example of the terminal circuit 3 which also uses three multiplex transmission lines. Referring to Fig. 18(c), the terminal circuit 3 is arranged so that capacitors 3c1, 3c2, 3d1 and 3d2 and a coil 3e are connected to the bus 6. Thus, in this embodiment, the capacitors 3c1, 3c2, 3d1 and 3d2 and the coil 3e can serve as filter means for restraining high-frequency noises from the bus 6.

Fig. 18(d) is a circuit diagram illustrating a further example of the terminal circuit 3 which also uses three multiplex transmission lines. Referring to Fig. 18(d), the terminal circuit 3 is arranged so that a power supply unit 3f and the like are connected to the bus 6. According to this embodiment, the potential of the bus 6 is kept within a fixed range by means of the power supply unit 3f, so that the noises from the bus 6 can be restrained. Fig. 18(e) shows an operational amplifier 3g as an example of the power supply unit 3f. Thus, in this embodiment, the potential of the bus 6 can be kept within the fixed range. In this case, the amplifier 3g serves to keep its output potential at V6 in a manner such that the potential V6 of the bus 6 is fetched to its positive input, and its negative input is connected to its output.

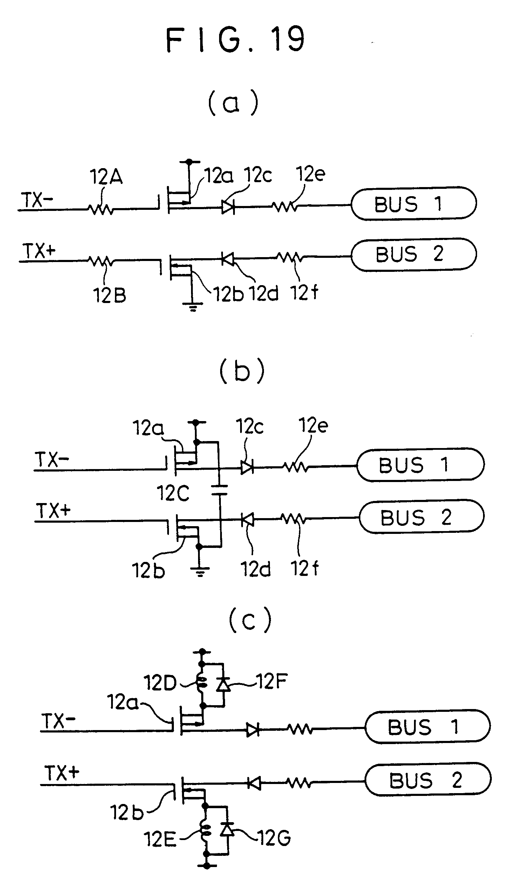

Figs. 19 to 22 show circuit diagrams illustrating several embodiments of the transmitter circuit according to the present invention.

Fig. 19(a) illustrates an embodiment in which resistors 12A and 12B are connected to the gates of the FETs 12a and 12b, respectively, of the transmitter circuit shown in Fig. 16. Thus, in this embodiment, the switching time for the FETs 12a and 12b can be adjusted by means of the resistors 12A and 12B. More specifically, in this arrangement, a delay circuit is formed by utilizing the respective input capacities of the gates of the FETs 12a and 12b and additionally using the resistors 12A and 12B. This embodiment can be utilized for the waveforms shown in Figs. 17(a), 17(b), 17(e) and 17(f). If one of the FETs is turned on and off earlier than the other, the switching speed is lowered by connecting the resistor to the FET of the higher switching speed. Thus, in this embodiment, the P- and N-channel FETs are switched with the same timing, so that the signal waveforms on the buses can be shaped up. In this embodiment, moreover, a CR circuit is formed by connecting the resistors 12A and 12B, so that the leading and trailing edges of the signal waveforms can be made gently-sloping. Thus, some switching delay can be ignored, so that the radiation of radio noises can be restrained. The difference between the respective ON resistances of the FETs 12a and 12b can be adjusted by means of the resistors 12e and 12f.

Fig. 19(b) illustrates an embodiment in which a capacitor 12C is connected between the respective sources of the FETs 12a and 12b. Thus, according to this embodiment, the power supply is restrained from shaking at the time of on-off operation, and the signal waveforms on the buses can be can be shaped up.

Fig. 19(c) illustrates an embodiment in which coils 12D and 12E are connected to the sources of the FETs 12a 12b, respectively. Thus, according to this embodiment, the on-state rush current can be restrained to make the leading edge gentle-sloping, so that the switching delay between the P and N channels can be absorbed. Also, frequency-component noises at the leading edge can be removed, so that the radiation of radio noises can be restrained. Diodes 12F and 12G, which are connected in parallel with the coils 12D and 12E, respectively, serve to prevent production of reverse starting voltages in the coils when the FETs 12a and 12b are turned off.

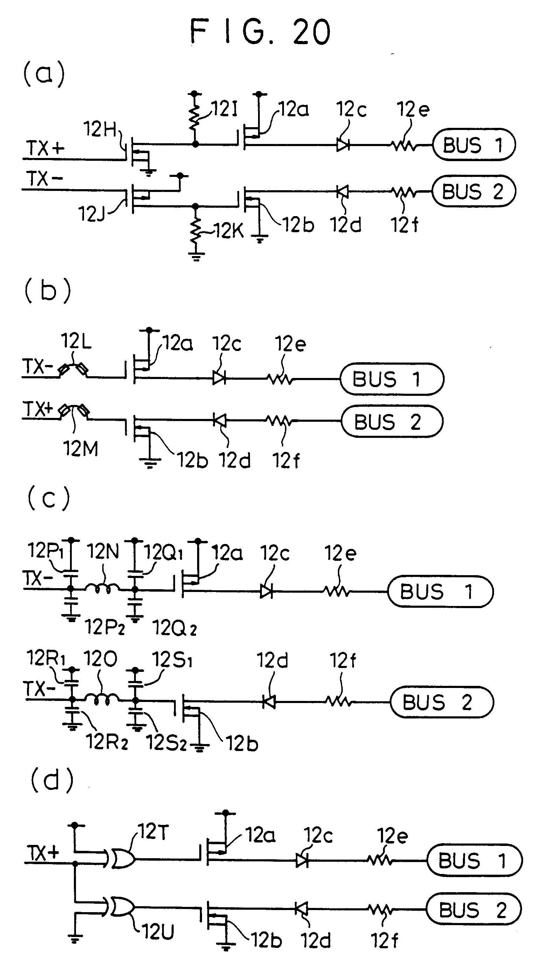

Fig. 20(a) illustrates an embodiment in which an N-channel FET 12H and a resistor 12I are connected to the gate side of the P-channel FET 12a, and a P-channel FET 12J and a resistor 12K are connected to the gate side of the N-channel FET 12b. Thus, according to this embodiment, the switching delay between the P and N channels can be canceled. More specifically, in this embodiment, the P-channel FETs 12a and 12J, which are identical elements of one type, and the N-channel FETs 12b and 12H, which are identical elements of another type, are combined with one another. In this embodiment, therefore, the timing for the leading and trailing edges of the P and N channels, which is irregular as shown in Figs. 17(c), 17(d), 17(g) and 17(h), can be regularized when the data are outputted.

If the times required for the FETs 12a, 12b, 12H and 12J to be turned on are ta, tb, tH and tJ, respectively, and if the times required for these FETs to be turned off are Ta, Tb, TH and TJ, respectively, the times t1 and T1 required before the waveform on the bus 1 is switched on and off are $t1 = tH + ta$ and $T1 = TH + Ta$, respectively, and the times t2 and T2 required before the waveform on the bus 2 is switched on and off are $t2 = tJ + tb$ and $T2 = TJ + Tb$, respectively. Since $ta = tJ$, $tb = tH$, $Ta = Tj$, and $Tb = TH$ are given, $t1 = t2$ and $T1 = T2$ are obtained. According to this embodiment, as seen from these equations, the timing can be regularized when the data are outputted.

Figs. 20(b) and 20(c) illustrate embodiments in which filter means is connected to the gate side of the FETs 12a and 12b. Thus, in these embodiments, noises from the respective gates of the FETs 12a and 12b and the leading edges of the waveforms can be restrained. The filter means of Fig. 20(b) is composed of ferrite beads 12L and 12M, while the filter means of Fig. 20(c) are composed of coils 12N and 12O and capacitors 12P1, 12Q1, 12P2, 12Q2, 12R1, 12S1, 12R2 and 12S2.

Fig. 20(d) illustrates an embodiment in which exclusive OR circuits (hereinafter referred to as XORs) 12T and 12U are connected to the gate side of the FETs 12a and 12b. Thus, this embodiment is effective when the inputs TX+ and TX- of the FET gates cannot be synchronously switched. When the input of the one XOR is at high level, an inverted version of the input of the other XOR is outputted. When the input of the one XOR is at low level, on the other hand, the input state of the other XOR is outputted. If the XORs 12T and 12U are logical elements of the same type, the respective gate input waveforms of the FETs 12a and 12b share the same timing.

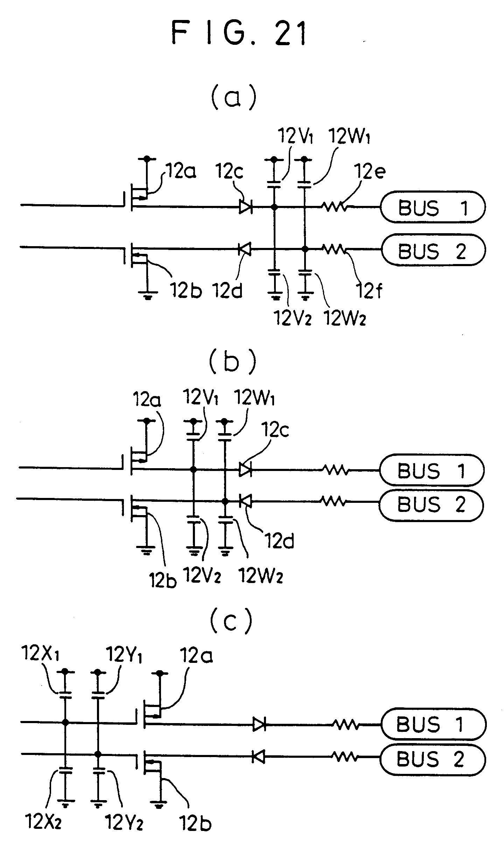

Figs. 21(a) and 21(b) illustrate embodiments in which a CR circuit is formed by connecting capacitors 12V1, 12V2, 12W1 and 12W2 between the diodes 12c and 12d and the resistors 12e and 12f or between the FETs 12a and 12b and the diodes 12c and 12d. Thus, according to these embodiments, the on-off operation of the FETs 12a and 12b can be blunted. The difference between the embodiments of Figs. 21(a) and 21(b) lies in that the capacity between the transmission lines cannot be increased in the arrangement of Fig. 21(b). Referring to Fig. 21(b), according to this embodiment, the capacitors 12V1 and 12V2 are connected between the FET 12a and the diode 12c, while the capacitors 12W1 and 12W2 are connected between the FET 12b and the diode 12d. Thus connected to the transmission nodes, these capacitors are operative only during transmission. This is because the bus signal waveforms transmitted from other nodes during reception are prevented from reaching the capacitors 12V1, 12V2, 12W1 and 12W2 by the diodes 12c and 12d.

Fig. 21(c) illustrates an embodiment in which capacitors 12X1, 12X2, 12Y1 and 12Y2 are connected to the gate side of the FETs 12a and 12b. Thus, according to this embodiment, the signal waveforms from the FET gates are blunted so that the frequency component at the leading edge is removed. In this embodiment, moreover, the timing for the rise and fall of the FETs 12a and 12b can be regulated by adjusting the respective capacitance values of the capacitors 12X1, 12X2, 12Y1 and 12Y2.

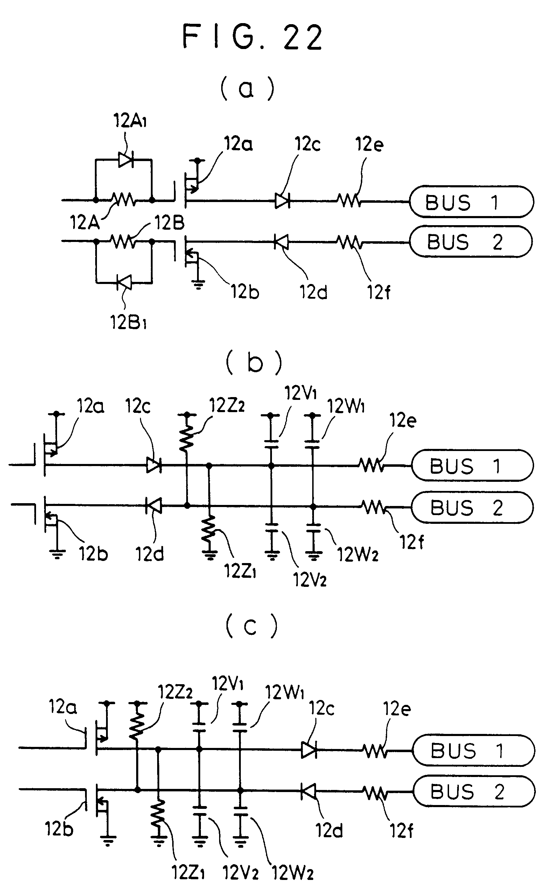

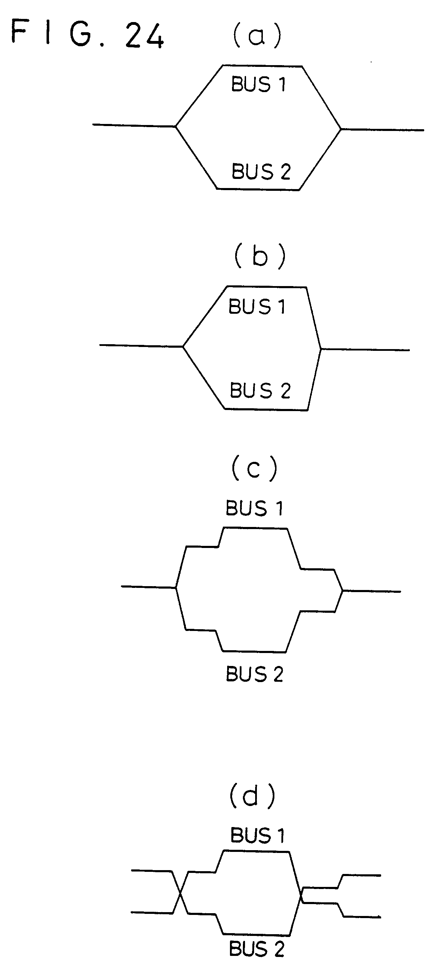

Fig. 22(a) illustrates an embodiment in which diodes 12A1 and 12B1 are connected in parallel with the gate resistors 12A and 12B of the circuit shown in Fig. 19(a). Thus, according to this embodiment, the fall of each signal waveform can be made faster than that of the signal waveforms (see Fig. 24(a)) on the buses 1 and 2 shown in Fig. 19(a), so that the signal delay can be reduced, as shown in Fig. 24(b). If the leading and trailing edges of the bus signal waveforms are switched with the same timing, more noises are produced when the current flows, that is, at the leading edges of the signal waveforms, and less at the trailing edges. Thus, according to this embodiment, the leading edges of the signal waveforms are made gently-sloping, and the delay of the trailing edges is reduced, so that the transmission speed can be increased.

Figs. 22(b) and 22(c) illustrate embodiments in which resistors 12Z1 and 12Z2 are connected between the diodes 12c and 12d and the resistors 12e and 12f or between the FETs 12a and 12b and the diodes 12c and 12d of the circuit shown in Figs. 21(a) and 21(b). Thus, according to these embodiments, the fall of the bus signal waveforms can be quickened.

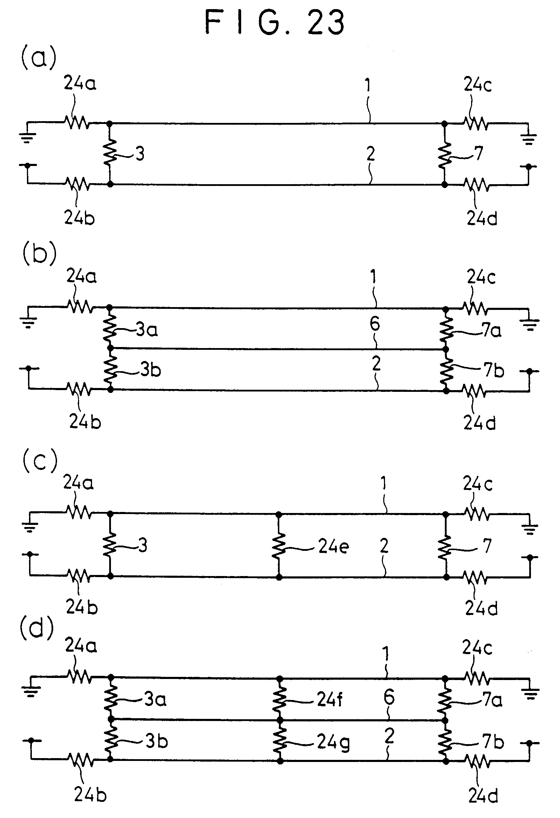

Figs. 23(a) and 23(b) illustrate embodiments in which bias resistors 24a, 24b, 24c and 24d are connected across the terminal circuits 3 and 7 in a network including two or more multiplex transmission lines. Thus, according to these embodiments, if either of the terminal circuits is disengaged from the bus, thereby producing reflected waves, the influence of the waves can be removed to enable normal reception. Fig. 23(a) is a circuit diagram illustrating a two-bus arrangement, and Fig. 23(b) is a circuit diagram illustrating a three-bus arrangement.

More specifically, if one of the terminal circuits is disengaged, reflected waves are produced, resulting in a delay at the trailing edge of each signal waveform, as shown in Fig. 24(c). Bias voltage is applied across the bias resistors 24a and 24d in a manner such that the resistors on the side of the bus 1 is connected to the ground and the resistors on the side of the bus 2 to Vcc. Even though the reflected waves are generated, therefore, their influence can be removed, as shown in Fig. 24(d). Thus, the receiver circuit can normally receive data signals.

Figs. 23(c) and 23(d) illustrate embodiments in which resistors 24e, 24f and 24g are connected between and near the middle of the buses. Thus, according to these embodiments, the impedance between the buses can be lowered, and the influence of the reflected waves can be removed. Fig. 23(c) is a circuit diagram illustrating a two-bus arrangement, and Fig. 23(d) is a circuit diagram illustrating a three-bus arrangement.

According to the present invention, moreover, the terminal circuits shown in Fig. 18 and the transmitter circuits of the embodiments shown in Figs. 19 to 23 may be used in combination with one another. Also, the receiver circuits of the various embodiments may be used in combination. Further, transistors may be used in place of the FETs 12a and 12b according to the embodiments described herein.

Although the bus-type configurations have been described in connection with the embodiments shown in Fig. 23, the present invention is not limited to this type, and may be also applied to loop-type configurations.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. A multiplex transmission system for data transmission between a plurality of multiplex nodes (10, 20, 30) connected to one another by means of at least two signal transmission lines (1, 2), comprising

   terminal circuits (3, 7) for individually connecting the respective terminal portions of the signal transmission lines (1, 2),
   each multiplex node (10, 20, 30) including a transmitter circuit (12) for detecting the state of data on the basis of the difference of potential between the signal transmission lines (1, 2) and transmitting the data in accordance with the detected state,
   each multiplex node (10, 20, 30) further including passive potential detecting means (16; 21) for detecting the potential when the state of each signal transmission line (1, 2) is in a passive-mode, CHARACTERIZED BY
   bias means (17, 18) for analogously applying a bias to input lines (4, 5) from the respective signal transmission lines (1, 2) in accordance with the passive-mode potential detected by the passive potential detecting means (16; 21), to set the input potentials (V1, V2) of the signal transmission lines (1, 2) so as to fall within a predetermined range.

2. A multiplex transmission system according to claim 1, characterized in that the bias means (17, 18) sets the input potential from one of the signal transmission lines (1, 2) so as to be lower than the input potentials of any other signal transmission lines when the state of each signal transmission line (1, 2) is passive, and so as to be higher than the input potentials of the other signal transmission lines when the state of each signal transmission line (1, 2) is dominant.

3. A multiplex transmission system according to claims 1 or 2, characterized in that each terminal circuit (3, 7) and the transmitter circuit (12) include restraining means (3c1, 3c2) for restraining noises produced on the individual signal transmission lines (1, 2) by the edge component of a certain steep pulse and the unbalance of the switching speed of the transmitter circuit (12).

4. A multiplex transmission system according to one or more of claims 1-3, characterized in that each terminal circuit (3, 7) includes a bias resistor (24a, 24c) connected between one (1) of the signal transmission lines (1, 2) and the ground, and a bias resistor (24b, 24d) connected between another signal transmission line (2) and the power supply.

**5.** A multiplex transmission system according to one or more of claims 1-4, characterized by further comprising a resistor (24e) connecting the signal transmission lines (1, 2) substantially at the middle point thereof and serving to lower the impedance between the signal transmission lines (1, 2).

**6.** A multiplex transmission system according to one or more of claims 1-5, characterized in that the passive potential detecting means (16) detect an intermediate potential (V3) of the signal transmission lines (1, 2) as the passive-mode potential in which the signal transmission lines (1, 2) are not driven by the transmitter circuit (12).

**7.** A multiplex transmission system according to claim 6, characterized in that the passive potential detecting means (16) includes two resistors (16a, 16b) connected in series between two of the signal transmission lines (1, 2), the junction thereof serving as the output point for the intermediate potential (V3).

**8.** A multiplex transmission system according to one or more of claims 1-5, characterized in that the passive potential detecting means (21) detect a first and a second intermediate potential (V3a, V3b) of the signal transmission lines (1, 2, 6) as the passive-mode potential,

the passive potential detecting means (21) comprising
a first diode (21c) and resistor (21d) connected in series between a first and a second signal transmission line (1, 6), the junction thereof serving as the output point for the first intermediate potential (V3a); and
a second diode (21a) and resistor (21b) connected in series between the second and a third signal transmission lines (6, 2), the junction thereof serving as the output point for the second intermediate potential (V3b).

**9.** A multiplex transmission system for data transmission between a plurality of multiplex nodes (10, 20, 30) connected to one another by means of at least three signal transmission lines (1, 2, 6), comprising

terminal circuits (3, 7) for individually connecting the respective terminal portions of the signal transmission lines (1, 2, 6),
each multiplex node (10, 20, 30) including a transmitter circuit (12) for detecting the state of data on the basis of the difference of potential between the signal transmission lines (1, 2) and transmitting the data in accordance with the detected state,
characterized in that each the multiplex node (10, 20, 30) includes bias means (17, 18) for analogously applying a bias to input lines (4, 5) from two (1, 2) of the signal transmission lines in accordance with the potential of the other signal transmission line (6), to set the input potentials (V1, V2) of the two signal transmission lines (1, 2) so as to fall within a predetermined range.

**10.** A multiplex transmission system according to claim 9, characterized in that each multiplex node (10, 20, 30) includes voltage restricting means (51, 52) for restricting the input potentials (V1, V2) within the predetermined range.

**11.** A multiplex transmission system according to claims 9 or 10, characterized in that the bias means (17, 18) sets the input potentials from the signal transmission lines (1, 2 ,6) within the predetermined range in an analog manner without regard to variations of the respective potentials of the signal transmission lines (1, 2, 6).

**12.** A multiplex transmission system according to one or more of claims 9-11, characterized in that each terminal circuit (3, 7) and the transmitter circuit (12) include restraining means (3c1, 3c2) for restraining noises produced on the individual signal transmission lines (1, 2, 6) by the edge component of a certain steep pulse and the unbalance of the switching speed of the transmitter circuit (12).

**13.** A multiplex transmission system according to one or more of claims 9-12, characterized in that each terminal circuit (3, 7) includes a bias resistor (24a, 24c) connected between one (1) of the signal transmission lines (1, 2, 6) and the ground, and a bias resistor (24b, 24d) connected between another signal transmission line (2) and the power supply.

**14.** A multiplex transmission system according to one or more of claims 9-13, characterized by further comprising resistors (24f, 24g) connecting the signal transmission lines (1, 2, 6) substantially at the middle point thereof and serving to lower the impedance between the signal transmission lines (1, 2, 6).

**Patentansprüche**

**1.** Multiplexübertragungssystem für die Datenübertragung zwischen einer Vielzahl von Multiplexknoten (10, 20, 30), die mittels mindestens zweier Signalübertragungsleitungen miteinander verbunden sind, das folgendes umfaßt:

Klemmanschlußschaltungen (3, 7), um die jeweiligen Klemmanschlußabschnitte der Signalübertragungsleitungen (1, 2) einzeln zu verbinden,

wobei jeder Multiplexknoten (10, 20, 30) eine Senderschaltung (12) einschließt, um den Zustand der Daten auf der Grundlage der Potentialdifferenz zwischen den Signalübertragungsleitungen (1, 2) zu erfassen und um die Daten in Übereinstimmung mit dem erfaßten Zustand zu übertragen;

wobei jeder Multiplexknoten (10, 20, 30) weiterhin ein Passivpotential-Erfassungsmittel (16, 21) einschließt, um das Potential zu erfassen, wenn sich der Zustand einer jeden Signalübertragungsleitung (1, 2) in einem passiven Modus befindet, GEKENNZEICHNET DURCH ein Vorspannungsmittel (17, 18), um in Übereinstimmung mit dem Passivmodus-Potential, das von dem Passivpotential-Erfassungsmittel (16; 21) erfaßt wird, eine Vorspannung an die Eingabeleitungen (4, 5) von den jeweiligen Signalübertragungsleitungen (1, 2) analog anzulegen, um die Eingabepotentiale (V1, V2) der Signalübertragungsleitungen (1, 2) so einzustellen, daß sie in einen vorbestimmten Bereich fallen.

2. Multiplexübertragungssystem nach Anspruch 1, dadurch gekennzeichnet, daß das Vorspannungsmittel (17, 18) das Eingabepotential von einer der Signalübertragungsleitungen (1, 2) so einstellt, daß es niedriger ist als die Eingabepotentiale von irgendeiner der anderen Signalübertragungsleitungen (1, 2), wenn der Zustand einer jeden Signalübertragungsleitung (1, 2) passiv ist, und so einstellt, daß es höher als die Eingabepotentiale der anderen Signalübertragungsleitungen ist, wenn der Zustand einer jeden Signalübertragungsleitung (1, 2) dominant ist.

3. Multiplexübertragungssystem nach Anspruch 1 oder 2, dadurch gekennzeichnet, daß jede Klemmanschlußschaltung (3, 7) und die Senderschaltung (12) ein Begrenzungsmittel (3c1, 3c2) einschließt, um das auf den einzelnen Signalübertragungsleitungen (1, 2) von der Flankenkomponente eines bestimmten Steilpulses und der Asymmetrie der Schaltgeschwindigkeit der Senderschaltung (12) erzeugten Rauschen zu begrenzen.

4. Multiplexübertragungssystem nach einem oder mehreren der Ansprüche 1-3, dadurch gekennzeichnet, daß jede Klemmanschlußschaltung (3, 7) einen Vorspannungswiderstand (24a, 24c) einschließt, der zwischen einer Leitung (1) der Signalübertragungsleitungen (1, 2) und der Erde verbunden ist, und einen Vorspannungswiderstand (24b, 24d) einschließt, der zwischen einer anderen Signalübertragungsleitung (2) und der Stromversorgung verbunden ist.

5. Multiplexübertragungssystem nach einem oder mehreren der Ansprüche 1-4, dadurch gekennzeichnet, daß es weiterhin einen Widerstand (24e) umfaßt, der die Signalübertragungsleitungen (1, 2) im wesentlichen am Mittelpunkt davon verbindet und der dazu dient, die Impedanz zwischen den Signalübertragungsleitungen (1, 2) zu senken.

6. Multiplexübertragungssystem nach einem oder mehreren der Ansprüche 1-5, dadurch gekennzeichnet, daß das PassivpotentialErfassungsmittel (16) ein Zwischenpotential (V3) der Signalübertragungsleitungen (1, 2) als das Passivmodus-Potential erfaßt, bei dem die Signalübertragungsleitungen (1, 2) nicht von der Senderschaltung (12) betrieben werden.

7. Multiplexübertragungssysterrt nach Anspruch 6, dadurch gekennzeichnet, daß das Passivpotential-Erfassungsmittel (16) zwei Widerstände (16a, 16b) einschließt, die in Reihe zwischen zwei der Signalübertragungsleitungen (1, 2) verbunden sind, wobei ihr gemeinsamer Knoten als Ausgabepunkt für das Zwischenpotential (V3) dient.

8. Multiplexübertragungssystem nach einem oder mehreren der Ansprüche 1-5, dadurch gekennzeichnet, daß das Passivpotential-Erfassungsmittel (21) ein erstes und ein zweites Zwischenpotential (V3a, V3b) der Signalübertragungsleitungen (1, 2, 6) als das Passivmodus-Potential erfaßt;

wobei das Passivpotential-Erfassungsmittel (21) folgendes umfaßt: eine erste Diode (21c) und einen Widerstand (21d), die in Reihe zwischen einer ersten und einer zweiten Signalübertragungsleitung (1, 6) verbunden sind, wobei ihr gemeinsamer Knoten als Ausgabepunkt für das erste Zwischenpotential (V3a) dient; und eine zweite Diode (21a) und einen Widerstand (21b), die in Reihe zwischen der zweiten und einer dritten Signalübertragungsleitung (6, 2) verbunden sind, wobei ihr gemeinsamer Knoten als Ausgabepunkt für das zweite Zwischenpotential (V3b) dient.

9. Multiplexübertragungssystem für die Datenübertragung zwischen einer Vielzahl von Multiplexknoten (10, 20, 30), die mithilfe von mindestens drei Signalübertragungsleitungen (1, 2, 6) miteinander verbunden sind, das folgendes umfaßt:

Klemmanschlußächaltungen (3, 7), um die jeweiligen Klemmanschlußabschnitte der Signalübertragungsleitungen (1, 2, 6) einzeln zu verbinden,

wobei jeder Multiplexknoten (10, 20, 30) eine Senderschaltung (12) einschließt, um den Zustand der Daten auf der Grundlage der Potentialdifferenz zwischen den Signalübertragungsleitungen (1, 2) zu erfassen und um die Daten in Übereinstimmung mit dem erfaßten Zustand zu übertragen; dadurch gekennzeichnet, daß jeder Multiplexknoten (10, 20, 30) ein Vorspannungsmittel (17, 18) einschließt, um analog eine Vorspannung an die Eingabeleitungen (4, 5) von zwei (1, 2) der Signalübertragungsleitungen in Übereinstimmung mit dem Potential der anderen Signalübertragungsleitung (6) anzulegen, um die Eingabepotentiale (V1, V2) der zwei Signälübertragungsleitungen (1, 2) so einzustellen, daß sie in einen vorbestimmten Bereich fallen.

10. Multiplexübertragungssystem nach Anspruch 9, dadurch gekennzeichnet, daß jeder Multiplexknoten (10, 20, 30) ein Spannungsbegrenzungsmittel (51, 52) einschließt, um die Eingabepotentiale (V1, V2) innerhalb des vorbestimmten Bereichs zu begrenzen.

11. Multiplexübertragungssystem nach den Ansprüchen 9 oder 10, dadurch gekennzeichnet, daß das Vorspannungsmittel (17, 18) die Eingabepotentiale aus den Signalübertragungsleitungen (1, 2, 6) auf eine analoge Weise ohne Rücksicht auf Veränderungen der jeweiligen Potentiale der Signalübertragungsleitungen (1, 2, 6) im vorbestimmten Bereich einstellt.

12. Multiplexübertragungssystem nach einem oder mehreren der Ansprüche 9-11, dadurch gekennzeichnet, daß jede Klemmanschlußschaltung (3, 7) und die Senderschaltung (12) ein Begrenzungsmittel (3c1, 3c2) einschließt, um das auf den einzelnen Signalübertragungsleitungen (1, 2, 6) durch die Flankenkomponente eines bestimmten Steilpulses und die Asymmetrie der Schaltgeschwindigkeit der Senderschaltung (12) erzeugten Rauschen zu begrenzen.

13. Multiplexübertragungssystem nach einem oder mehreren der Ansprüche 9-12, dadurch gekennzeichnet, daß jede Klemmanschlußschaltung (3, 7) einen Vorspannungswiderstand (24a, 24c) einschließt, der zwischen eine Leitung (1) der Signalübertragungsleitungen (1, 2, 6) und der Erde verbunden ist, und einen Vorspannungswiderstand (24b, 24d) einschließt, der zwischen eine andere Signalübertragungsleitung (2) und der Stromversorgung verbunden ist.

14. Multiplexübertragungssystem nach einem oder mehreren der Ansprüche 9-13, dadurch gekennzeichnet, daß es weiterhin Widerstände (24f, 24g) einschließt, die die Signalübertragungsleitungen (1, 2, 6) im wesentlichen an ihrem Mittelpunkt verbindet und dazu dient, die Impedanz zwischen den Signalübertragungsleitungen (1, 2, 6) zu senken.

**Revendications**

1. Système de transmission multiplex pour la transmission de données entre une pluralité de noeuds multiplex (10, 20, 30) reliés les uns aux autres par l'intermédiaire d'au moins deux lignes de transmission de signaux (1, 2), comprenant :

   - des circuits de raccordement (3, 7) pour relier individuellement les parties de raccordement respectives des lignes de transmission de signaux (1, 2),
   - chaque noeud multiplex (10, 20, 30) incluant un circuit de transmission (12) pour détecter l'état de données sur la base de la différence de potentiel entre les lignes de transmission de signaux (1, 2) et transmettre les données selon l'état détecté,
   - chaque noeud multiplex (10, 20, 30) incluant de plus des moyens de détection de potentiel passifs (16 ; 21) pour détecter le potentiel quand l'état de chaque ligne de transmission de signaux (1, 2) est dans un mode passif,

   caractérisé par des moyens de polarisation (17, 18) pour appliquer, de façon analogique, une polarisation aux lignes d'entrée (4, 5) à partir des lignes de transmission de signaux respectives (1, 2) selon le potentiel à mode passif détecté par les moyens de détection de potentiel passifs (16 ; 21), pour régler les potentiels d'entrée (V1, V2) des lignes de transmission de signaux (1, 2) de façon à tomber dans une plage déterminée.

2. Système de transmission multiplex selon la revendication 1, caractérisé en ce que les moyens de polarisation (17, 18) fixent le potentiel d'entrée à partir de l'une des lignes de transmission de signaux (1, 2) de façon à être inférieur aux potentiels d'entrée des quelconques autres lignes de transmission de signaux, quand l'état de chaque ligne de transmission de signaux (1, 2) est passif, et de façon à être plus élevé que les potentiels d'entrée des autres lignes de transmission de signaux, quand l'état de chaque ligne de transmission de signaux (1, 2) est dominant.

3. Système de transmission multiplex selon les revendications 1 ou 2, caractérisé en ce que chaque circuit de raccordement (3, 7) et le circuit de transmission (12) incluent des moyens de restriction (3c1, 3c2) pour restreindre les bruits produits sur les lignes de transmission de signaux individuelles (1, 2) par la composante de front d'une certaine impulsion abrupte et le déséquilibre de la vitesse de commutation du circuit de transmission (12).

4. Système de transmission multiplex selon l'une ou plusieurs des revendications 1 - 3, caractérisé en ce que chaque circuit de raccordement (3, 7) inclut une résistance de polarisation (24a, 24c) reliée entre l'une (1) des lignes de transmission de signaux (1, 2) et la masse, et une résistance de polarisation (24b, 24d) reliée entre une autre ligne de transmission de signaux (2) et la source de courant.

5. Système de transmission multiplex selon l'une ou plusieurs des revendications 1 - 4, caractérisé an ce qu'il comprend de plus une résistance (24e) reliant les lignes de transmission de signaux (1, 2) sensiblement au point milieu de celles-ci et servant à abaisser l'impédance entre les lignes de transmission de signaux (1, 2).

6. Système de transmission multiplex selon l'une ou plusieurs des revendications 1 - 5, caractérisé en ce que les moyens de détection de potentiel passifs (16) détectent un potentiel intermédiaire (V3) des lignes de transmission de signaux (1, 2) comme le potentiel à mode passif dans lequel les lignes de transmission de signaux (1, 2) ne sont pas commandées par le circuit de transmission (12).

7. Système de transmission multiplex selon la revendication 6, caractérisé en ce que les moyens de détection de potentiel passifs (16) incluent deux résistances (16a, 16b) reliées on série entre deux des lignes de transmission de signaux (1, 2), la jonction de celles-ci servant comme le point de sortie pour le potentiel intermédiaire (V3).

8. Système de transmission multiplex selon l'une ou plusieurs des revendications 1 - 5, caractérisé en ce que les moyens de détection de potentiel passifs (21) détectent un premier et un second potentiels intermédiaires (V3a, V3b) des lignes de transmission de signaux (1, 2, 6) comme le potentiel à mode passif, les moyens de détection de potentiel passifs (21) comprenant :

- une première diode (21c) et résistance (21d) reliées an série entre une première et une deuxième lignes de transmission de signaux (1, 6), la jonction de celles-ci servant comme le point de sortie pour le premier potentiel intermédiaire (V3a); et

- une seconde diode (21a) et résistance (21b) reliées en série entre la deuxième et une troisième lignes de transmission de signaux (6, 2), la jonction de celles-ci servant comme le point de sortie pour le second potentiel intermédiaire (V3b).

9. Système de transmission multiplex pour la transmission de données entre une pluralité de noeuds multiplex (10, 20, 30) reliés les uns aux autres par l'intermédiaire d'au moins trois lignes de transmission de signaux (1, 2, 6), comprenant :

- des circuits de raccordement (3, 7) pour relier individuellement les parties de raccordement respectives des lignes de transmission de signaux (1, 2, 6),
- chaque noeud multiplex (10, 20, 30) incluant un circuit de transmission (12) pour détecter l'état de données sur la base de la différence de potentiel entre les lignes de transmission de signaux (1, 2) et pour transmettre les données selon l'état détecté,

caractérisé en ce que chaque noeud multiplex (10, 20, 30) inclut des moyens de polarisation (17, 18) pour appliquer, de façon analogique, une polarisation à des lignes d'entrée (4, 5) à partir de deux (1, 2) des lignes de transmission de signaux selon le potentiel de l'autre ligne de transmission de signaux (6), pour régler les potentiels d'entrée (V1, V2) des deux lignes de transmission de signaux (1, 2) de façon à tomber dans une plage prédéterminée.

10. Système de transmission multiplex selon la revendication 9, caractérisé an ce que chaque noeud multiplex (10, 20, 30) inclut des moyens de limitation de tension (51, 52) pour limiter les potentiels d'entrée (V1, V2) dans la plage prédéterminée.

11. Système de transmission multiplex selon les revendications 9 ou 10, caractérisé an ce que les moyens de polarisation (17, 18) règlent les potentiels d'entrée à partir des lignes de transmission de signaux (1, 2, 6) dans la plage prédéterminée, d'une manière analogique, indépendamment des variations des potentiels respectifs des lignes de transmission de signaux (1, 2, 6).

12. Système de transmission multiplex selon l'une ou plusieurs des revendications 9 - 11, caractérisé an ce que chaque circuit de raccordement (3, 7) et le circuit de transmission (12) incluent des moyens de restriction (3c1, 3c2) pour restreindre les bruits produits sur les lignes de transmission de signaux individuelles (1, 2, 6) par la composante de front d'une certaine impulsion abrupte et le déséquilibre de la vitesse de commutation du circuit de transmission (12).

13. Système de transmission multiplex selon l'une ou plusieurs des revendications 9 - 12, caractérisé en ce que chaque circuit de raccordement (3, 7) inclut une résistance de polarisation (24a, 24c) reliée entre l'une (1) des lignes de transmission de signaux (1, 2, 6) et la masse, et une résistance de polarisation (24b, 24d) reliée entre une autre ligne de transmission de signaux (2) et la source de courant.

14. Système de transmission multiplex selon l'une ou plusieurs des revendications 9 - 13, caractérisé en ce qu'il comprend de plus des résistances (24f, 24g) reliant les lignes de transmission de signaux (1, 2, 6) sensiblement au point milieu de celles-ci et servant à abaisser l'impédance entre les lignes de transmission de signaux (1, 2, 6).

F I G. 1

COMMUNI-CATION CONTROL CIRCUIT — 11

BIAS SECTION — 17, 4

BIAS SECTION — 18, 5

PASSIVE POTENTIAL DETECTOR SECTION — 16

TRANS-MITTER CIRCUIT — 12

MULTIPLEX NODE — 30

MULTIPLEX NODE — 20

$V_1$, $V_2$, $V_3$, $V_4$, $V_5$

1, 2, 3, 7, 10, 13, 14, 15, 19

# F I G . 2

# F I G . 3

FIG. 4

# F I G. 5

# F I G. 6

# F I G. 7

BUS 1 ——— ≷ 16a

———• ——— V3

≷ 16b

BUS 2 ———

# F I G. 8

BUS 1 ———

◁ 21a

———• ——— V3a

≷ 21b

BUS 6 ———•

≷ 21d

———• ——— V3b

◁ 21c

BUS 2 ———

# F I G. 9

# F I G. 10

# F I G. 11

## ( a )

BUS 1

BUS 2

P    D    P

## ( b )

BUS 1

BUS 2

P    D    P

## ( c )

P    D    P

BUS 1

BUS 2

## ( d )

BUS 4

V3a

V3b    BUS 5

P    D    P

## ( e )

P    D    P

BUS 4

BUS 5

## ( f )

BUS 4

BUS 5

P    D    P

# FIG. 12

(a)

BUS 1

BUS 6

BUS 2

P     D     P

(b)

BUS 1 · BUS 6

BUS 2

P     D     P

(c)

P     D     P

BUS 1

BUS 2 ·
BUS 6

(d)

BUS 6

BUS 1 ·
BUS 2

P     D     P

(e)

P     D     P

BUS 1 ·
BUS 2

BUS 6

(f)

P     D     P

BUS 6

BUS 2

BUS 1

(g)

P     D     P

BUS 2

BUS 1

BUS 6

# F I G. 13

EP 0 537 704 B1

# FIG.14

F I G. 15

# F I G. 16

# F I G. 17

(a)

BUS 1

BUS 2

(b)

BUS 1

BUS 2

(c)

BUS 1

BUS 2

(d)

BUS 1

BUS 2

(e)

BUS 1

BUS 6

BUS 2

(f)

BUS 1

BUS 6

BUS 2

(g)

BUS 1

BUS 6

BUS 2

(h)

BUS 1

BUS 6

BUS 2

# F I G . 18

(a)

(b)

(c)

(d)

(e)

# F I G. 19

## (a)

## (b)

## (c)

# FIG. 20

(a)

(b)

(c)

(d)

# F I G. 21

## (a)

## (b)

## (c)

# FIG. 22

## ( a )

## ( b )

## ( c )

# FIG. 23

(a)

(b)

(c)

(d)

# F I G. 24 (a)

BUS 1

BUS 2

(b)

BUS 1

BUS 2

(c)

BUS 1

BUS 2

(d)

BUS 1

BUS 2